(19) **Europäisches Patentamt European Patent Office Office européen des brevets**

(11) **EP 3 634 786 B1**

(12) **FASCICULE DE BREVET EUROPEEN**

(45) Date de publication et mention de la délivrance du brevet:
**21.04.2021 Bulletin 2021/16**

(21) Numéro de dépôt: **18748953.9**

(22) Date de dépôt: **04.06.2018**

(51) Int Cl.:
***B60C 23/06*** *(2006.01)*

(86) Numéro de dépôt international:
**PCT/FR2018/051286**

(87) Numéro de publication internationale:
**WO 2018/224764 (13.12.2018 Gazette 2018/50)**

(54) **PROCÉDÉ DE DIAGNOSTIC DE L'ÉTAT DE GONFLAGE D'UN PNEUMATIQUE DE VÉHICULE**

DIAGNOSEVEFAHREN ZUR FESTSTELLUNG DES ZUSTANDES DES REIFENS EINES FAHRZEUGS

DIAGNOSTIC METHOD FOR DETERMINATING THE OPERATING STATE OF A VEHICLE TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2017 FR 1755127**

(43) Date de publication de la demande:
**15.04.2020 Bulletin 2020/16**

(73) Titulaire: **Renault S.A.S.**
**92100 Boulogne-Billancourt (FR)**

(72) Inventeurs:
• **SAINT-LOUP, Philippe**
**78760 Jouars Ponchartrain (FR)**
• **LESCARRET, Stéphanie**
**35450 Livr sur changeon (FR)**
• **DAVINS-VALLDAURA, Joan**
**75007 Paris (FR)**
• **PITA-GIL, Guillermo**
**75017 Paris (FR)**

(56) Documents cités:
**DE-A1- 4 409 846      DE-A1-102012 206 845**

**Description**

L'invention se rapporte à un procédé de diagnostic de l'état de gonflage d'un pneumatique de véhicule. Un tel procédé peut s'appliquer avantageusement mais non exclusivement à un véhicule automobile.

Pour la suite de la description, les notions de « roue » et de « pneumatique » sont équivalentes.

Cette invention entre dans le cadre de la détection de l'état de dégonflage d'au moins un des pneumatiques d'un véhicule automobile, par une méthode indirecte.

En général, le système de surveillance de la pression pneumatique (SSPP) a pour objectif d'alerter instantanément le conducteur en cas de perte de pression des pneumatiques, afin qu'il puisse procéder sans tarder, au regonflage du pneumatique sous-gonflé ou procéder à son remplacement. Une telle mesure permet :

- De réduire les émissions de CO2 qui seraient causées par un sous-gonflage,
- D'allonger la durée de vie des pneumatiques et,
- D'augmenter la sécurité des passagers, en réduisant le risque d'éclatement des roues.

Les solutions SSPP actuelles ou méthodes directes, sont basées sur l'utilisation de capteurs de pression installés sur chaque valve des roues du véhicule, en mesurant en temps réel les valeurs de pression et de température. Les inconvénients de ces solutions sont que :

- Les pneumatiques doivent être adaptés à l'installation de tels capteurs,
- Les capteurs de pression nécessitent une maintenance régulière pour minimiser le risque de défaut et la perte de détection,
- Les capteurs de pression engendrent des coûts de fabrication et d'entretien significatifs.

De nouvelles solutions sans capteur de pression (SSPP indirect) proposent de mettre en place un système de détection d'un sous-gonflage à partir de l'analyse de signaux présents sur un bus CAN (angle volant, vitesses angulaires, régime moteur et accélérations). Or, ces nouvelles solutions ou méthodes indirectes, sont plus complexes que les solutions actuelles, et leur mise au point est plus difficile. Le SSPP indirect est constitué d'algorithmes de détection de sous-gonflage qui font appel à un nombre important de paramètres de réglage. Afin d'optimiser tous ces paramètres et valider le réglage final obtenu, une base de données importante issue d'un grand nombre d'essais correspondant à des phases de roulage, a été conçue. Par conséquent, le temps de simulation du système sur toute cette base de données, fait que la mise au point manuelle des algorithmes de détection du SSPP est une tâche complexe, fastidieuse et chronophage.

Les systèmes SSPP indirects, basés sur les vitesses angulaires des roues sont constitués, entre d'autres, par deux types d'algorithmes de détection.

Le premier algorithme de détection se base sur une analyse comparative des rayons dynamiques des roues à partir des signaux de vitesses angulaires. En effet, une baisse du rayon dynamique a comme conséquence directe une augmentation de la vitesse angulaire de la roue. Cet algorithme appelé système de détection de crevaison (SDC) permet de détecter efficacement toute baisse de pression dans une roue.

Le deuxième algorithme est basé sur l'analyse spectrale des signaux de vitesses angulaires. Il a été constaté que la baisse de la pression engendre une diminution des fréquences caractéristiques des vibrations du véhicule et de la roue, apparaissant dans le signal de vitesse angulaire. Cet algorithme est capable de détecter un dégonflage de plusieurs roues, et il est très utile pour détecter les faibles pertes de pression accumulées après une longue période de roulage. Ce système est appelé système de détection de diffusion (SDD).

Dans le cadre de l'expérimentation et de la validation des algorithmes de détection de diffusion SDD, des centaines d'essais de roulage sur une flotte de véhicules ont été réalisés, avec ou sans sous-gonflage, sur une ou plusieurs roues.

A partir des tops roues, les algorithmes existants reconstituent pour chaque roue une vitesse, puis calcule à partir de cette vitesse une fréquence torsionnelle de ladite roue.

Des études statistiques sur les fréquences torsionnelles des roues avant et arrière, ont montré un écart de fréquence significatif sur les roues d'un même train, lorsqu'une des deux roues présente un sous gonflage.

Le document DE 10 2012 206845 A1 peut être cité comme art antérieur, divulguant de-même un procédé de diagnostic de l'état de dégonflage d'un pneumatique d'un train de véhicule comprenant un premier pneumatique et un deuxième pneumatique, défini en ce qu'il comprend une étape de détermination de la fréquence torsionnelle d'un des pneumatiques.

Un procédé de diagnostic de l'état de gonflage d'une roue selon l'invention, permet de détecter un état de dégonflage d'une roue par rapport à l'état de gonflage de l'autre roue d'un même train sur un véhicule, en s'affranchissant de toute corrélation avec les autres roues.

L'invention a pour objet un procédé de diagnostic de l'état de dégonflage d'un pneumatique d'un train de véhicule comprenant un premier pneumatique et un deuxième pneumatique.

La principale caractéristique d'un procédé selon l'invention est qu'il comprend les étapes suivantes,

- Une étape de détermination de la fréquence torsionnelle $F_1$ du premier pneumatique et de la fréquence torsionnelle $F_2$ du deuxième pneumatique,

- Une étape de détermination de l'écart $\Delta F$ entre la

fréquence torsionnelle $F_1$ du premier pneumatique et la fréquence torsionnelle $F_2$ du deuxième pneumatique,

- Une étape d'évaluation de la probabilité d'avoir un sous-gonflage de l'un desdits pneumatique par rapport à l'autre pneumatique, en calculant le rapport de la valeur absolue dudit écart $\Delta F$ sur une valeur seuil d'un écart relatif, représentatif d'un sous-gonflage entre les deux pneumatiques.

Un tel procédé est basé sur la détermination d'une probabilité de sous-gonflage d'un pneumatique par rapport à l'autre pneumatique du même train, ledit procédé utilisant comme paramètre principale la fréquence torsionnelle de chaque roue dudit train. La valeur seuil est représentative d'un sous-gonflage significatif d'une roue par rapport à l'autre roue du même train. En effet, il faut que l'écart entre les fréquences torsionnelles des deux roues soit suffisamment important pour être sûr de détecter un sous-gonflage.

Avantageusement, l'étape de détermination de la fréquence torsionnelle d'un pneumatique consiste en une étape de calcul réalisée à partir de la vitesse dudit pneumatique.

De façon préférentielle, la vitesse de chaque pneumatique est reconstituée par des algorithmes à partir des tops roues.

Préférentiellement, l'étape de détermination de l'écart entre les fréquences torsionnelles des deux pneumatiques est réalisée à partir d'un moyennage dudit écart sur une période donnée $T_{détection}$.

De façon avantageuse, l'étape de moyennage est réalisée à partir de la formule :

$$\Delta F_{moy} = \frac{\int_0^{T_{detection}} \Delta F . dt}{T_{detection}}$$

Avantageusement, la valeur seuil est issue d'un grand nombre d'essais de roulage sur une flotte de véhicules, avec ou sans sous-gonflage sur une ou plusieurs roues, cette valeur seuil correspondant à l'écart relatif maximal observé lors desdits essais.

De façon préférentielle, un procédé de diagnostic selon l'invention est complété par une étape de contrôle consistant à mesurer au moyen d'un capteur la pression de chaque pneumatique, puis à comparer l'état de gonflage de chaque pneumatique obtenu avec ledit capteur et celui obtenu à partir de la fréquence torsionnelle dudit pneumatique.

Un procédé de diagnostic selon l'invention présente l'avantage de ne pas nécessiter d'apprentissage et d'être réalisés à partir d'algorithmes déjà existants pour calculer la fréquence torsionnelle de chaque roue. Il a de plus l'avantage d'avoir une mise au point facile, car il met en œuvre un nombre restreint de paramètres de réglage. Il présente enfin l'avantage de pouvoir détecter rapidement et avec une grande fiabilité un sous-gonflage.

On donne ci-après une description détaillée d'un mode de réalisation préféré d'un procédé de diagnostic selon l'invention, en se référant aux figures suivantes :

- La figure 1 est un diagramme de la fréquence torsionnelle au cours du temps obtenue pour deux roues d'un même train sans dégonflage,
- La figure 2 est un diagramme de la fréquence torsionnelle au cours du temps obtenue pour deux roues d'un même train, l'une des deux roues ayant subi un dégonflage significatif.

Un procédé de diagnostic selon l'invention, permet de détecter un sous-gonflage de l'une des deux roues d'un même train d'un véhicule automobile, cette détection étant réalisée à partir de l'analyse de la fréquence torsionnelle de chaque roue dudit train.

Il est supposé qu'un véhicule comprend un train avant et un train arrière, et que chaque train comprend une roue gauche et une roue droite.

Dans le cadre de l'expérimentation et de la validation des algorithmes de détection de diffusion SDD, des centaines d'essais de roulage sur une flotte de véhicules, avec ou sans sous-gonflage sur une ou plusieurs roues ont été réalisés.

A partir des tops roues, les algorithmes existants reconstituent alors, pour chaque roue une vitesse, puis calcule à partir de ladite vitesse la fréquence torsionnelle de ladite roue.

Des études statistiques sur les fréquences torsionnelles des roues avant et arrière ont montré un écart de fréquence significatif sur les roues d'un même train, lorsqu'une des deux roues présente un sous-gonflage.

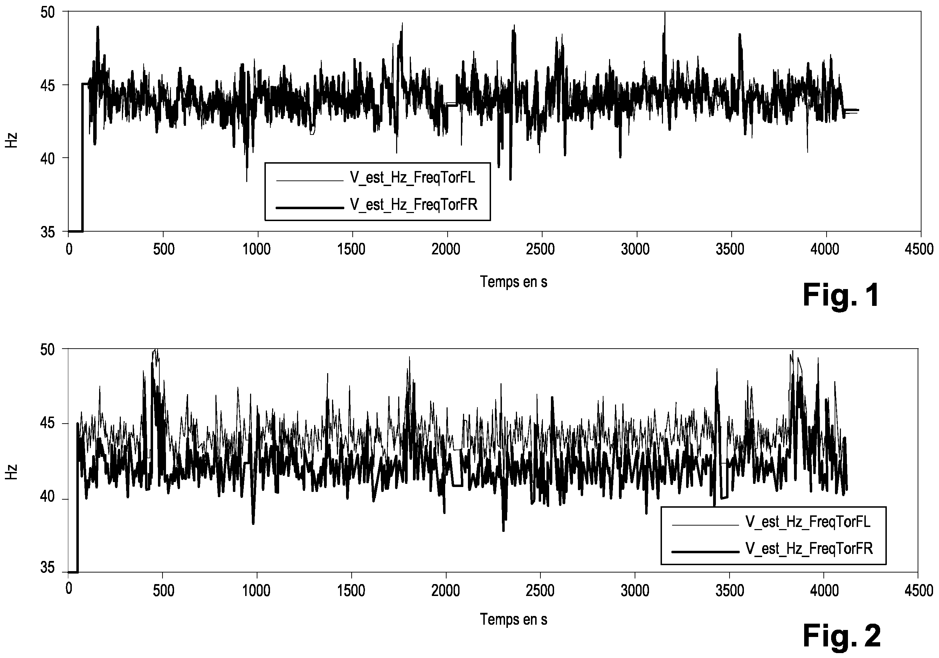

En effet, en se référant à la figure 1, si les deux roues d'un même train n'ont subi aucun dégonflage ou ne présentent aucun sous-gonflage significatif, les variations de la fréquence torsionnelle desdites roues en fonction du temps sont quasiment identiques.

En revanche, en se référant à la figure 2, si l'une des deux roues a subi un dégonflage de l'ordre de 30% par rapport à l'autre roue, nous observons un écart de la valeur de la fréquence torsionnelle au cours du temps, cet écart demeurant constant sur une période donnée. En effet, la fréquence torsionnelle de la roue ayant subi un dégonflage significatif, est plus faible que celle de la roue n'ayant subi aucun dégonflage.

Pour détecter le sous-gonflage d'une roue, les étapes suivantes sont mises en œuvre :

- Une étape de calcul de l'écart de fréquence d'un même train/essieu, à partir de la formule :

$$\Delta F = F_1 - F_2,$$

Où, $F_1$ est la fréquence torsionnelle de la roue gauche et $F_2$ est la fréquence torsionnelle de la roue droite

- Une étape de moyennage de l'écart de fréquence sur une période de détection $T_{detection}$, à partir de la formule :

$$\Delta F_{moy} = \frac{\int_0^{T_{detection}} \Delta F . dt}{T_{detection}}$$

- Une étape d'évaluation, à chaque détection, des probabilités $P_1$ et $P_2$ de dégonflage respectivement de la roue gauche et de la roue droite d'un même train, à partir des formules :

  ▪ *Si*

$$\Delta F_{moy} > 0, \; P_1 = \frac{|\Delta F_{moy}|}{Seuil} \; et \; P_2 = 0$$

  ▪ *Si*

$$\Delta F_{moy} < 0, \; P_1 = 0 \; et \; P_2 = \frac{|\Delta F_{moy}|}{Seuil}$$

Le paramètre *Seuil* représente la valeur seuil sur l'écart relatif entre les fréquences torsionnelles des deux roues correspondant à un sous-gonflage entre les deux roues.

Le choix de ce paramètre est très important afin d'avoir un bon fonctionnement du procédé proposé. La valeur de ce paramètre doit être choisie de manière à garantir que les valeurs de probabilité P1 et P2 soient bien comprises entre 0 et 1. Généralement, après la réalisation d'une base de données avec un nombre important de tests réels réalisés, l'écart relatif maximal obtenu sera choisi comme la valeur du seuil. Il faut remarquer que la valeur finale de ce paramètre *seuil* sera différente pour chaque véhicule. En plus, la base de données utilisée pour choisir le paramètre *seuil,* devra posséder des résultats de tests réalisés avec différentes conditions de roulage, par exemple avec une masse différente, pour garantir à un procédé selon l'invention, un certain niveau de robustesse.

Les paramètres de réglage de ce procédé sont les suivants :

- Le facteur d'oubli du calcul de la fréquence torsionnelle, qui va plus ou moins lisser les valeurs de fréquences et limiter l'impact du bruit sur le procédé,

- Le temps de détection, qui peut être relativement court, d'où l'intérêt de ce procédé,
- Le seuil sur l'écart qui peut être ajusté selon les conditions de robustesse exigées.

**Revendications**

1. Procédé de diagnostic de l'état de dégonflage d'un pneumatique d'un train de véhicule comprenant un premier pneumatique et un deuxième pneumatique, **caractérisé en ce qu'**il comprend les étapes suivantes,

   - Une étape de détermination de la fréquence torsionnelle $F_1$ du premier pneumatique et de la fréquence torsionnelle $F_2$ du deuxième pneumatique,
   - Une étape de détermination de l'écart $\Delta F$ entre la fréquence torsionnelle $F_1$ du premier pneumatique et la fréquence torsionnelle $F_2$ du deuxième pneumatique,
   - Une étape d'évaluation de la probabilité d'avoir un sous-gonflage de l'un desdits pneumatique par rapport à l'autre pneumatique, en calculant le rapport de la valeur absolue dudit écart $\Delta F$ sur une valeur seuil d'un écart relatif, représentatif d'un sous-gonflage entre les deux pneumatiques.

2. Procédé selon la revendication 1, **caractérisé en ce que** l'étape de détermination de la fréquence torsionnelle d'un pneumatique consiste en une étape de calcul réalisée à partir de la vitesse dudit pneumatique.

3. Procédé selon la revendication 2, **caractérisé en ce que** la vitesse de chaque pneumatique est reconstituée par des algorithmes à partir des tops roues.

4. Procédé selon l'une quelconque des revendications 1 à 3, **caractérisé en ce que** l'étape de détermination de l'écart entre les fréquences torsionnelles des deux pneumatiques est réalisée à partir d'un moyennage dudit écart sur une période donnée $T_{détection}$.

5. Procédé selon la revendication 4, **caractérisé en ce que** l'étape de moyennage est réalisée à partir de la formule :

$$\Delta F_{moy} = \frac{\int_0^{T_{detection}} \Delta F . dt}{T_{détection}}$$

6. Procédé selon l'une quelconque des revendications 1 à 5, **caractérisé en ce que** la valeur seuil est issue d'un grand nombre d'essais de roulage sur une flotte de véhicules, avec ou sans sous-gonflage sur une ou plusieurs roues, et **en ce que** cette valeur seuil correspond à l'écart relatif maximal observé lors desdits essais.

7. Procédé selon l'une quelconque des revendications 1 à 6, **caractérisé en ce qu'**il est complété par une étape de contrôle consistant à mesurer au moyen d'un capteur la pression de chaque pneumatique, puis à comparer l'état de gonflage de chaque pneumatique obtenu avec ledit capteur et celui obtenu à partir de la fréquence torsionnelle dudit pneumatique.

**Patentansprüche**

1. Verfahren zur Diagnose des Druckverlustzustands eines Reifens einer Fahrzeugachse, die einen ersten Reifen und einen zweiten Reifen umfasst, **dadurch gekennzeichnet, dass** es die folgenden Schritte umfasst:

   - einen Schritt der Bestimmung der Torsionsfrequenz $F_1$ des ersten Reifens und der Torsionsfrequenz $F_2$ des zweiten Reifens,
   - einen Schritt der Bestimmung der Abweichung $\Delta F$ zwischen der Torsionsfrequenz $F_1$ des ersten Reifens und der Torsionsfrequenz $F_2$ des zweiten Reifens,
   - einen Schritt der Bewertung der Wahrscheinlichkeit, dass ein zu niedriger Fülldruck eines der Reifen in Bezug auf den anderen Reifen vorliegt, durch Berechnen des Verhältnisses des absoluten Betrages der Abweichung $\Delta F$ zu einem Schwellenwert einer relativen Abweichung, die für einen zu niedrigen Fülldruck zwischen den zwei Reifen repräsentativ ist.

2. Verfahren nach Anspruch 1, **dadurch gekennzeichnet, dass** der Schritt der Bestimmung der Torsionsfrequenz eines Reifens in einem Schritt der Berechnung besteht, der anhand der Geschwindigkeit des Reifens durchgeführt wird.

3. Verfahren nach Anspruch 2, **dadurch gekennzeichnet, dass** die Geschwindigkeit jedes Reifens durch Algorithmen aus Rad-Impulsgipfeln abgeleitet wird.

4. Verfahren nach einem der Ansprüche 1 bis 3, **dadurch gekennzeichnet, dass** der Schritt der Bestimmung der Abweichung zwischen den Torsionsfrequenzen der zwei Reifen anhand einer Mittelung der Abweichung über einen gegebenen Zeitraum $T_{détection}$ durchgeführt wird.

5. Verfahren nach Anspruch 4, **dadurch gekenn-**

**zeichnet, dass** der Schritt der Mittelung anhand folgender Formel durchgeführt wird:

$$\Delta F_{moy} = \frac{\int_0^{T_{détection}} \Delta F \, . dt}{T_{détection}}$$

6. Verfahren nach einem der Ansprüche 1 bis 5, **dadurch gekennzeichnet, dass** der Schwellenwert aus einer großen Anzahl von Fahrversuchen mit einer Fahrzeugflotte hervorgegangen ist, mit oder ohne zu niedrigen Fülldruck an einem oder mehreren Reifen, und dadurch, dass dieser Schwellenwert der maximalen relativen Abweichung entspricht, die bei diesen Versuchen beobachtet wurde.

7. Verfahren nach einem der Ansprüche 1 bis 6, **dadurch gekennzeichnet, dass** es durch einen Schritt der Kontrolle ergänzt wird, der darin besteht, mittels eines Sensors den Druck jedes Reifens zu messen und dann den mit dem Sensor erhaltenen Druckzustand jedes Reifens und denjenigen, der aus der Torsionsfrequenz des Reifens erhalten wurde, zu vergleichen.

**Claims**

1. Method for diagnosing the state of deflation of a tire of a vehicle axle system comprising a first tire and a second tire, **characterized in that** it comprises the following steps:

   - a step of determining the torsional frequency $F_1$ of the first tire and the torsional frequency $F_2$ of the second tire,
   - a step of determining the difference $\Delta F$ between the torsional frequency $F_1$ of the first tire and the torsional frequency $F_2$ of the second tire,
   - a step of evaluating the probability of one of said tires being underinflated compared with the other tire by calculating the ratio of the absolute value of said difference $\Delta F$ to a threshold value of a relative difference that is representative of underinflation of one tire with respect to the other.

2. Method according to Claim 1, **characterized in that** the step of determining the torsional frequency of a tire consists of a calculation step carried out on the basis of the speed of said tire.

3. Method according to Claim 2, **characterized in that** the speed of each tire is recreated by algorithms on the basis of wheel signals.

4. Method according to any one of Claims 1 to 3, **char-**

**acterized in that** the step of determining the difference between the torsional frequencies of the two tires is carried out by averaging said difference over a given period $T_{detection}$.

5. Method according to Claim 4, **characterized in that** the averaging step is carried out on the basis of the formula:

$$\Delta F_{av} = \frac{\int_{0}^{T_{detection}} \Delta F.dt}{T_{detection}}$$

6. Method according to any one of Claims 1 to 5, **characterized in that** the threshold value results from a large number of running tests on a fleet of vehicles, with or without one or more wheels being underinflated, and **in that** this threshold value corresponds to the maximum relative difference observed during said tests.

7. Method according to any one of Claims 1 to 6, **characterized in that** it is supplemented by a checking step that consists in measuring the pressure in each tire by means of a sensor, then in comparing the state of inflation of each tire obtained using said sensor and that obtained from the torsional frequency of said tire.

Fig. 1

Fig. 2

EP 3 634 786 B1

**EP 3 634 786 B1**

## RÉFÉRENCES CITÉES DANS LA DESCRIPTION

**Documents brevets cités dans la description**

*   DE 102012206845 A1